# EUROPÄISCHE PATENTSCHRIFT

(11) **EP 3 281 889 B1**
(45) Veröffentlichungstag und Bekanntmachung des Hinweises auf die Patenterteilung: **16.10.2019**
(21) Anmeldenummer: 17174485.7
(22) Anmeldetag: 06.06.2017
(51) Int. Cl.: B65G 15/34, B65G 15/40

(54) **GESCHLOSSENER FÖRDERGURT**
CLOSED CONVEYOR BELT
BANDE TRANSPORTEUSE FERMÉE

(30) Priorität: 11.08.2016 DE 102016214922
(43) Veröffentlichungstag der Anmeldung: 14.02.2018
(73) Patentinhaber: ContiTech Transportbandsysteme GmbH, 30165 Hannover (DE)
(72) Erfinder: Müller, Georg, 50678 Köln (DE); Behrens, Carsten, 37434 Bilshausen (DE); Nolte, Hartwig, 37181 Hardegsen (DE); Schlomski, Jens, 37115 Duderstadt (DE); Stange, Lysander, 37154 Northeim (DE)
(74) Vertreter: Preusser, Andrea

(56) Entgegenhaltungen:
- EP-A1- 2 066 572
- DE-A1-102010 060 574
- DE-A1-102014 215 637
- US-A- 5 860 510

## Beschreibung

Die Erfindung betrifft einen geschlossenen Fördergurt.

Derartige geschlossene Fördergurte sind bspw. derzeit unter dem Handelsnamen SICON® erhältlich. Diese Fördergurte bestehen aus einer tropfenförmigen "Tasche" aus einer hochflexiblen Kautschukmischung und werden auch als Taschenfördergurt oder als Taschengurt bezeichnet. An den beiden Enden sind mittels Heißvulkanisation, Verklebung oder mechanischer Fixierung Tragprofile angebracht, die der Gurtführung zwischen Stütz- und Führungsrollen dienen. Im Zentrum der Profile sind Stahlseile einvulkanisiert, die die Gurtzugkräfte von den Antriebselementen übernehmen. Die Profile sind übereinander angeordnet, dadurch ist der Gurt staubdicht geschlossen. Diese Profil-Anordnung ermöglicht dem Gurt außerdem eine seitliche Neigung, so dass der Kurvenradius weniger als ein Meter betragen kann.

Die Beladung kann an jeder gewünschten Stelle in der Transportstrecke erfolgen. Der Gurt wird mit Sonderführungsrollen zu einer U-förmigen Tasche geöffnet. Das Fördergut aufnehmende Gurtteil, im Folgenden als Gurttasche oder Tasche bezeichnet, dämpft die Fallenergie, beruhigt, beschleunigt und umschließt anschließend das Fördergut. Ebenso ist ein Zwischenabwurf an jeder Stelle der Transportstrecke möglich.

Der ständige Wechsel zwischen Beladung und Entladung bzw. Zwischenabwurf des Fördergutes stellt extrem hohe Anforderungen an die einzelne Gurttasche. Da die Tasche zur Wahrung der Flexibilität in der Regel keine Verstärkungseinlagen in Form von textilen Flächengebilden oder Stahlseilen besitzt, neigt sie bei hoher Dehnung und Stauchung im untersten Punkt und im Bereich der Verbindung zum Profil zur Rissbildung. Zusätzlich ist derzeit die Größe der Tasche auf ca. 1200 mm begrenzt, was zukünftig nicht mehr allen Kundenanforderungen gerecht werden wird. Das Dokument US5860510 offenbart einen geschlossenen Fördergurt nach dem Oberbegriff des Anspruchs 1.

Die Aufgabe der vorliegenden Erfindung ist es daher, einen geschlossenen Fördergurt der eingangs genannten Art bereitzustellen, der sich durch eine deutlich verringerte Neigung zur Rissbildung, insbesondere am untersten Punkt der Tasche und im Bereich der Verbindung zum Profil, auszeichnet. Gleichzeitig soll der geschlossene Fördergurt auch eine Größe von mehr als 1200 mm aufweisen können, ohne die physikalischen und mechanischen Eigenschaften des Fördergurtes, insbesondere der Fördergurttasche, negativ zu beeinträchtigen.

Die Aufgabe wird erfindungsgemäß durch einen geschlossenen Fördergurt mit den Merkmalen gemäß Anspruch 1 gelöst.

Überraschenderweise hat sich gezeigt, dass durch eine derartige Lage aus wenigstens einem textilen Werkstoff eine "Sperrung" in Laufrichtung des geschlossenen Fördergurtes vermieden werden kann, während gleichzeitig quer zur Laufrichtung eine Erhöhung der Zugfestigkeit und der Traglast realisiert und somit Rissbildungen verhindert werden können. Gleichzeitig werden somit auch andere Größen des geschlossenen Fördergurts ermöglicht.

"Durchgängig" bedeutet gemäß Duden Online Wörterbuch der deutschen Sprache "von Anfang bis Ende durchgehend".

Die Gurttasche ist in einer bevorzugten Ausführungsform frei von weiteren, d.h. zusätzlichen, Verstärkungslagen, insbesondere von solchen aus textilen Flächengebilden oder Stahleinlagen.

Die Gurttasche ist bevorzugt einlagig oder mehrlagig ausgestaltet.

Besonders bevorzugt ist die Gurttasche zweilagig ausgebildet und besteht aus einer Oberseite und einer Unterseite. Die Lage A der Oberseite und die Lage B der Unterseite bestehen hierbei jeweils aus einer Kautschukmischung, die gleich sein können, bevorzugt allerdings verschieden voneinander sind.

Bevorzugt befindet sich auf der Oberseite A der Tasche, d.h. die Seite, die in direktem Kontakt zu dem zu transportierenden Fördergut steht, eine Kautschukmischung mit einer hohen Medienbeständigkeit. Als Kautschuke hierfür werden in der Regel bevorzugt Nitrilkautschuk (NBR), der gegebenenfalls auch als hydrierter Nitrilkautschuk (HNBR) vorliegen kann, und / oder Fluorkautschuk, wie bspw. FKM und / oder FFKM, eingesetzt.

Auf der Unterseite B der Tasche, d.h. die Seite, die keinen Kontakt zu dem zu transportierenden Fördergut besitzt, aber die höchste dynamische Beanspruchung durch ständige Biegewechsel bei Be- und Entladen erfährt, befindet sich eine sehr flexible Kautschukmischung. Als Kautschukkomponente für diese flexible Kautschukmischung kann bspw. Butylkautschuk und / oder Halobutylkautschuk und / oder Nitrilkautschuk und / oder Chloroprenkautschuk und / oder natürliches oder synthetisches Polyisopren und / oder Styrolbutadienkautschuk verwendet werden.

Die Lage aus wenigstens einem textilen Werkstoff ist bevorzugt ein Gewebe, Gewirk oder Gestrick. Besonders bevorzugt handelt es sich um ein Gewebe, besonders bevorzugt um ein Drehergewebe.

Diese Lage kann entweder auf die Oberseite oder die Unterseite der Gurttasche aufgebracht werden. Ist die Gurttasche zweilagig aufgebaut, so befindet sich die Lage aus wenigstens einem Werkstoff bevorzugt zwischen diesen beiden Kautschuklagen.

Ist die Gurttasche aus mehr als zwei Lagen aufgebaut, so befindet sich die Lage aus wenigstens einem Werkstoff bevorzugt ebenso zwischen zwei der mehr als zwei Kautschuklagen.

Das nach der Vulkanisation lediglich wenigstens ein durchgängiger Faden in Querrichtung zur Gurtförderrichtung verbleibt, lässt sich bevorzugt auf zwei Varianten ermöglichen.

In einer ersten Variante wird für den Faden in Förderrichtung ein Polymer verwendet, welches eine Schmelztemperatur unterhalb der Vulkanisationstemperatur besitzt. Der Faden in Querrichtung zur Förderrichtung hingegen besitzt eine Schmelztemperatur, welche höher ist als die Vulkanisationstemperatur. Während der Vulkanisation schmilzt somit der Faden in Förderrichtung und es verbleibt lediglich der Faden quer zu Förderrichtung.

In einer zweiten Variante wird für den Faden in Förderrichtung ein Werkstoff verwendet, welcher mechanisch weniger stabil ist im Verglich zu dem Werkstoff des Fadens quer zur Förderrichtung. Während der Vulkanisation reißt der Faden in Förderrichtung durch die bei der Vulkanisation auftretenden Kräfte, so dass nach der Vulkanisation kein durchgängiger Faden in Förderrichtung mehr vorhanden ist. Der Faden in Querrichtung zur Förderrichtung hingegen besitzt eine Schmelztemperatur, welche höher ist als die Vulkanisationstemperatur. Es verbleibt somit als durchgängiger Faden lediglich der Faden quer zu Förderrichtung.

Als Materialien für die zusätzliche Verstärkungslage können alle der fachkundigen Person bekannten textilen Festigkeitsträgermaterialien natürlichen oder synthetischen Ursprungs alleine oder in Kombination verwendet werden.

Als synthetische Materialien kommen insbesondere synthetische Polymere, wie bspw. Polyacrylnitril, Polypropylen, Polyester, Polyamid, Polyurethan, Polyphenylensulfid, Polyoxadiazol, Aramide, wie p-Aramid, m-Aramid oder co-poly para Aramid, Polyimid, Polyetherimid, Polyetheretherketon, Polyethylen-2,6-naphthalat, Polyphenylen, Polyphenylenoxid, Polyphenylensulfid, Polyphenylenether, Polybenzoxazole, Polyvinylalkohol in Frage. Bei den natürlichen Materialien kann es sich um Steinwolle oder Asbest oder um Baumwolle, Flachs oder Hanf, oder um Wolle oder Seide, handeln.

Die Erfindung soll nun anhand von zwei Figuren näher erläutert werden, ohne auf diese beschränkt zu sein:

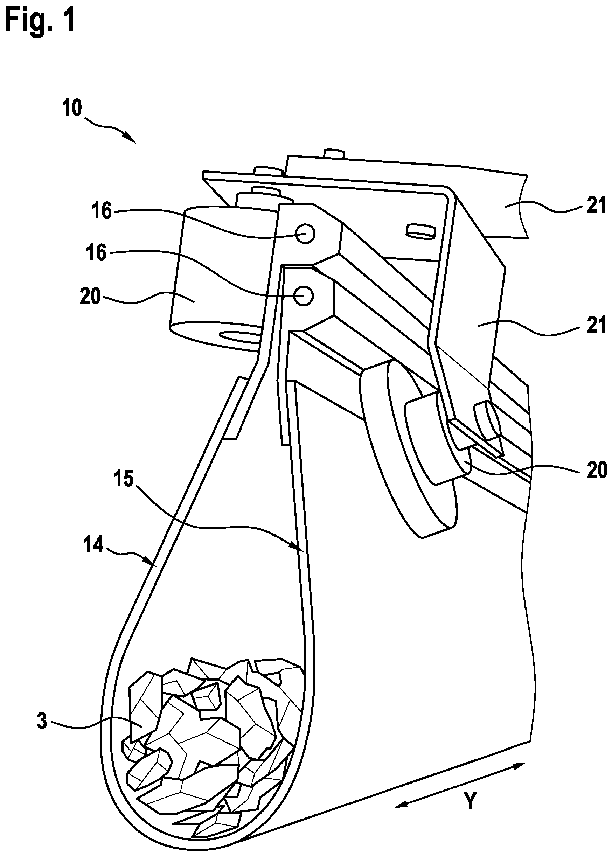

Fig. 1 zeigt einen herkömmlichen geschlossenen Fördergurt 10 mit sich darin befindlichen zu transportierendem Fördergut 3. Ein derartiger Fördergurt ist derzeit unter dem Handelsnamen SICON® erhältlich. Die Gurttasche 14, 15 besteht hierbei aus lediglich einer Kautschukmischung, d.h. ist einlagig aufgebaut. Die Bauteile 20, 21 sind die Führungsschienen bzw. die Führungsrollen des Fördergurtes, Y gibt die Transportrichtung an.

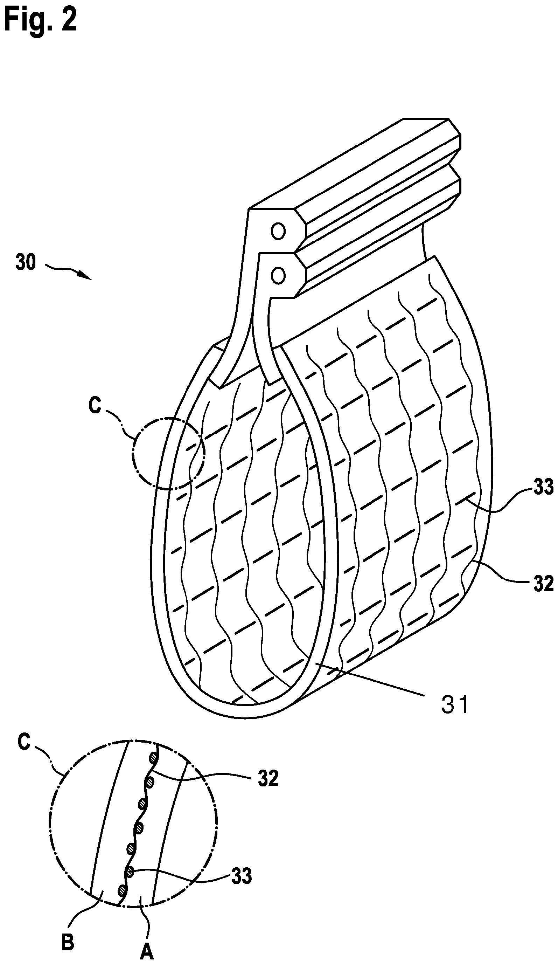

Fig. 2 zeigt einen geschlossenen Fördergurt 30 mit einer erfindungsgemäßen Gurttasche 31. Der vergrößerte Ausschnitt C zeigt ein Gewebe eingebettet in die Unterseite B und die Oberseite A. Das Gewebe enthält einmal den Faden in Gurtförderrichtung 33, der nach der Vulkanisation nicht verbleibt, und den Faden quer zur Gurtförderrichtung 32, der nach der Vulkanisation verbleibt.

### Bezugszeichenliste (Teil der Beschreibung)

- 10: geschlossener Fördergurt
- 3: Fördergut
- 14, 15: Gurtasche
- 16: Profil
- 20, 21: weitere Bauteile
- 30: geschlossener Fördergurt
- 31: Gurttasche
- C: vergrößerter Ausschnitt aus der Gurttasche
- A: Oberseite der Gurttasche
- B: Unterseite der Gurttasche
- 32: Faden quer zur Gurtförderrichtung
- 33: Faden in Gurtförderrichtung

## Patentansprüche

1. Geschlossener Fördergurt (20) mit einem Fördergut aufnehmenden Gurtteil (31),
**dadurch gekennzeichnet, dass** das Fördergut aufnehmende Gurtteil (31), d.h. die Gurttasche aus wenigstens eine Lage aus wenigstens einem textilen Werkstoff hergestellt ist, der aus wenigstens zwei Fäden besteht, wobei wenigstens ein durchgängiger Faden in Gurtförderrichtung (33) und wenigstens ein durchgängiger Faden in Querrichtung zur Gurtförderrichtung (32) vorhanden ist, und nach anschließender Vulkanisation der Gurttasche nur der wenigstens eine durchgängige Faden in Querrichtung zur Gurtförderrichtung (32) verblieben ist.

2. Geschlossener Fördergurt nach Anspruch 1, **dadurch gekennzeichnet, dass** die Lage aus wenigstens einem textilen Werkstoff ein Gewebe ist.

## Claims

1. Closed conveyor belt (20) having a belt part (31) that receives conveyed goods,
**characterized in that** the belt part (31), i.e. the belt pocket, that receives conveyed goods is produced from at least one tier of at least one textile material which is composed of at least two threads, wherein at least one continuous thread is present in the belt-conveying direction (33) and at least one continuous thread is present in the transverse direction relative to the belt-conveying direction (32), and only the at least one continuous thread in the transverse direction relative to the belt-conveying direction (32) remains upon subsequent vulcanization of the belt pocket.

2. Closed conveyor belt according to Claim 1, **characterized in that** the tier from at least one textile material is a woven fabric.

## Revendications

1. Bande transporteuse fermée (20) comprenant une partie de bande (31) recevant un produit à transporter, **caractérisée en ce que** la partie de bande (31) recevant le produit à transporter, c'est-à-dire la poche de bande, est fabriquée à partir d'au moins une couche d'au moins une matière textile qui comprend au moins deux fils, au moins un fil continu étant présent dans la direction de transport de bande (33) et au moins un fil continu étant présent dans la direction transversale à la direction de transport de bande (32) et, après vulcanisation subséquente de la poche bande, il ne reste plus que l'au moins un fil continu dans la direction transversale à la direction de transport de bande (32).

2. Bande transporteuse fermée selon la revendication 1, **caractérisée en ce que** la couche d'au moins une matière textile est un tissu.
